# EUROPÄISCHE PATENTANMELDUNG

(11) **EP 2 787 263 A1**
(43) Veröffentlichungstag der Anmeldung: **08.10.2014**
(21) Anmeldenummer: 14172075.5
(22) Anmeldetag: 03.03.2010
(51) Int. Cl.: F16L 23/14, E04F 17/04, F24F 13/02, F24F 13/08, F16B 5/06, F16B 17/00, F16B 19/00

(54) **Verbindungssystem zum luftdichten Verbinden von zwei Luftkanalabschnitten**

(30) Priorität: 05.03.2009 DE 102009011380
(62) Teilanmeldung aus: 10710538.9
(71) Anmelder: Hermanussen Metallverarbeitung GmbH, 59457 Werl (DE)
(72) Erfinder: Dravenau, Paul, 10119 Berlin (DE); Tenner, Martin, 59457 Werl (DE); Lehmann, Jörg, 59457 Werl (DE)
(74) Vertreter: Isfort, Olaf

(57) **Zusammenfassung**

Die Erfindung betrifft ein Verbindungssystem (16) zum luftdichten Verbinden von zwei Luftkanalabschnitten eines im Querschnitt polygonal, insbesondere rechteckig, ausgebildeten Luftkanals, mit Flanschprofilen (1), die endseitig an den Wandungen der Luftkanalabschnitte befestigbar sind, und mit in die Flanschprofile (1) einsetzbaren Eckwinkelstücken (17) zum gegenseitigen Verbinden der Flanschprofile (1) an den Ecken des Luftkanals. Gemäß der Erfindung weist das Verbindungssystem (16) Abdichtkappen (13) auf, die als an ihrer dem Luftkanal zugewandten Innenseite offene, hohle Eckkappen ausgebildet sind, jeweils über zwei an einer Ecke des Luftkanals angeordnete Eckwinkelstücke (17) stülpbar sind und in ihrem inneren Hohlraum eine plastische Dichtmasse (15) aufweisen, wobei die Abdichtkappen (13) bei deren bestimmungsgemäßer Anordnung an dem Luftkanal die Trennfuge zwischen den Luftkanalabschnitten in den Eckbereichen des Luftkanals dichtend verschließen.

## Beschreibung

Die Erfindung betrifft ein Verbindungssystem zum luftdichten Verbinden von zwei Luftkanalabschnitten eines im Querschnitt polygonal, insbesondere rechteckig, ausgebildeten Luftkanals, mit Flanschprofilen, die endseitig an den Wandungen der Luftkanalabschnitte befestigbar sind, und mit in die Flanschprofile einsetzbaren Eckwinkelstücken zum gegenseitigen Verbinden der Flanschprofile an den Ecken des Luftkanals.

Ein Flanschprofil ist beispielsweise aus der DE 43 031 150 A1 bekannt. Mit diesem Flanschprofil soll eine sichere und genaue Montage desselben auf einem Luftkanalteilstück gewährleistet und damit eine dauerhafte luftdichte Verbindung des Flanschprofils mit dem Luftkanalteilstück sowie der Luftkanalteilstücke untereinander hergestellt werden. Die Dichtungswirkung soll elastisch erhalten bleiben und den technologischen Forderungen auf ausreichende Passbarkeit bei der Fertigung des Flanschprofils und seiner Montage Rechnung tragen. Hierzu ist der Scheitel des in dem Flanschprofil eingearbeiteten Wulstfalzes mit einer elastischen Dichtungsmasse bedeckt, die an der inneren Seite der Außenwandung des zweiten L-Schenkels elastisch anliegend den konstruktiv vorgesehenen Spalt zwischen dieser Außenwandung sowie dem Scheitel des Wulstfalzes hermetisch verschließt.

Aufgabe der Erfindung ist es, ein Verbindungssystem zum luftdichten Verbinden von zwei Luftkanalabschnitten eines im Querschnitt polygonal, insbesondere rechteckig, ausgebildeten Luftkanals bereitzustellen, welches gegenüber herkömmlichen Verbindungssystemen deutlich bessere Stabilitäts- und Abdichteigenschaften aufweist.

Diese Aufgabe wird erfindungsgemäß durch Abdichtkappen gelöst, die als an ihrer dem Luftkanal zugewandten Innenseite offene, hohle Eckkappen ausgebildet sind, jeweils über zwei an einer Ecke des Luftkanals angeordnete, miteinander verbundene Eckwinkelstücke, von denen jedes jeweils einem der beiden miteinander verbundenen Luftkanalabschnitte zugeordnet ist, stülpbar sind und in ihrem inneren Hohlraum eine plastische Dichtmasse aufweisen, wobei die Abdichtkappen bei bestimmungsgemäßer Anordnung an dem Luftkanal die Trennfuge zwischen den Luftkanalabschnitten in den Eckbereichen des Luftkanals dichtend verschließen.

Bei herkömmlichen Verbindungssystemen sind die Eckbereiche des Luftkanals, in denen die Eckwinkelstücke zum Verbinden der Flanschprofile angeordnet sind, meist nicht dauerhaft abgedichtet. Zwar ist es bekannt, die Eckbereiche produktionsseitig abzudichten, jedoch kommt es beispielsweise durch Vibrationen und Verdrehungen bei der Verladung und dem Transport des Luftkanals zum jeweiligen Einsatzort zu Schäden an der Abdichtung. Die Eckbereiche stellen insofern besondere Schwachstellen dar, durch die ein Austritt von in dem Luftkanal geführter Luft in die Umgebung erfolgen kann. Durch die erfindungsgemäßen Abdichtkappen lassen sich gerade diese Schwachstellen sehr gut abdichten, so dass insgesamt ein Verbindungssystem mit sehr guten Abdichteigenschaften gegeben ist.

Die Abdichtkappen haben vorzugsweise eine im Längsschnitt L-förmige Gestalt und sind im Querschnitt beispielsweise U-förmig ausgebildet. In dieser Ausgestaltung können sie einfach auf die beiden an der Verbindungsstelle im Eckbereich des Luftkanals vorhandenen Eckwinkelstücke aufgesteckt werden. Die im Inneren der Abdichtkappen vorhandene plastische Dichtmasse dient hierbei insbesondere zum abdichtenden Verschließen der Trennfuge zwischen den Luftkanalabschnitten.

Nach einer vorteilhaften Ausgestaltung der Erfindung überdeckt jede Abdichtkappe bei ihrer bestimmungsgemäßen Anordnung an einer Ecke des

Luftkanals die beiden dort angeordneten Eckwinkelstücke vollständig und die mit den Eckwinkelstücken verbundenen Flanschprofile zumindest in ihren Endbereichen, wo sie mit den Eckwinkelstücken verbunden sind. Hierdurch ist die beste Dichtwirkung zu erzielen, da keine unabgedichteten Bereiche verbleiben.

Vorzugsweise passt sich die plastische Dichtmasse der Abdichtkappe bei bestimmungsgemäßer Anordnung derselben an einer Ecke des Luftkanals an die Form der beiden dort angeordneten, miteinander verbundenen Eckwinkelstücke sowie an die Form der Enden der mit den Eckwinkelstücken verbundenen Flanschprofile an, in der Weise, dass die Abdichtkappe über die plastische Dichtmasse an dem Luftkanal fixiert ist. Hierdurch lassen sich die Abdichtkappen ohne weitere Befestigungsmaßnahmen auf einfache Art und Weise an dem Luftkanal festlegen. Zudem ist durch die Anpassung der plastischen Dichtmasse an die Form der Eckwinkelstücke und an die Form der Enden der mit den Eckwinkelstücken verbundenen Flanschprofile eine optimale Dichtwirkung der Abdichtkappen verbunden.

Es wird weiter vorgeschlagen, dass der die plastische Dichtmasse enthaltende innere Hohlraum jeder Abdichtkappe bis zur Anbringung derselben an dem Luftkanal mittels einer abziehbaren Folie an der Innenseite der Abdichtkappe verschlossen ist. Diese Ausgestaltung verhindert ein Austrocknen der Dichtmasse und dient insbesondere dem Schutz vor Verunreinigungen der plastischen Dichtmasse sowie vor mechanischen Einflüssen.

Bevorzugt ist die plastische Dichtmasse klebend und/oder aushärtbar ausgebildet, was ebenfalls den Sitz und Halt sowie die dauerhafte Dichtwirkung der Abdichtkappen verbessert.

Offenbart wird des Weiteren ein Flanschprofil zum luftdichten Verbinden von zwei Luftkanalabschnitten eines Luftkanals, das als im Querschnitt im Wesentlichen L-förmiges Hohlprofil aus gefalztem Blech ausgebildet ist, wobei
- die L-Schenkel des Flanschprofils doppelwandig ausgebildet sind und jeweils eine Innenwandung und eine Außenwandung aufweisen,
- die Wandungen des ersten L-Schenkels eine endseitig offene Einstecktasche zum Einstecken der Wandung eines der Luftkanalabschnitte bilden,
- die Wandungen des zweiten L-Schenkels eine Aufnahmekammer zur Aufnahme eines Schenkels eines Eckwinkelstückes bilden,
- der zweite L-Schenkel an seiner der Trennfuge zwischen den Luftkanalabschnitten zugewandten Innenwandung einen entlang der Längserstreckung des Flanschprofils verlaufenden, in das Innere des Hohlprofils hinein bis an die Außenwandung des zweiten L-Schenkels heran ragenden Wulstfalz aufweist, der die Wandung des Luftkanalabschnittes beim Einstecken in der Einstecktasche führt und einen Scheitel aufweist.

Der erste L-Schenkel des Flanschprofils erstreckt sich bei bestimmungsgemäßer Anordnung des Flanschprofils an der Wandung eines Luftkanalabschnittes im Wesentlichen parallel zu dieser Wandung. Der zweite L-Schenkel ist im Wesentlichen senkrecht zu der Wandung angeordnet. Die Begriffe "Innenwandung" und "Außenwandung" sind im Sinne der Erfindung so zu verstehen, dass nach dem Verbinden der Luftkanalabschnitte zu einem Luftkanal die Außenwandungen der L-Schenkel des Flanschprofils von außen zugänglich sind, während die Innenwandungen der L-Schenkel nicht zugänglich an oder in dem Luftkanal angeordnet sind. Dabei ist die Innenwandung des die Einstecktasche ausbildenden ersten L-Schenkels in dem Luftkanal und die Innenwandung des zweiten L-Schenkels im Wesentlichen in der Ebene der Trennfuge zwischen den miteinander verbundenen Luftkanalabschnitten angeordnet.

Nachteilig bei der aus dem Stand der Technik bekannten Ausgestaltung des Flanschprofils ist, dass die Außenwandungen der L-Schenkel nach dem Verschweißen des Flanschprofils mit einem Luftkanalabschnitt nicht mit den Innenwandungen der L-Schenkel zusammenwirken. Sie sind lediglich über die elastische Dichtmasse miteinander verbunden. Wirkt eine Kraft auf einen Teil des Flanschprofils ein, so kann diese Kraft nicht auf andere Teile des Flanschprofils übertragen werden, sondern führt zu ungewünschten Deformationen des Flanschprofils sowohl im elastischen als auch im plastischen Bereich.

Um gegenüber herkömmlichen Flanschprofilen deutlich bessere Stabilitäts- und Abdichteigenschaften zu erzielen, wird vorgeschlagen, dass die Außenwandung des zweiten L-Schenkels im Übergangsbereich zu der Außenwandung des ersten L-Schenkels einen Zwischenabschnitt mit zu dem Wulstfalz komplementärer, nach außen gewölbter und gerundeter Form hat, wobei das Flanschprofil nach dem Verschweißen mit einer in die Einstecktasche eingesteckten Wandung des Luftkanalabschnittes in der Weise verformt ist, dass der Scheitel des Wulstfalzes an die Außenwandung des zweiten L-Schenkels im Bereich des Zwischenabschnittes flächig angepresst wird.

Erfindungsgemäß ist somit ein Zwischenabschnitt vorgesehen, welcher bei bestimmungsgemäßer Anordnung des Flanschprofils an dem Luftkanalabschnitt an dem Scheitel des Wulstfalzes anliegt, um somit die Stabilität und auch die Dichtwirkung des Flanschprofils zu verbessern. Diese Konfiguration nimmt das Flanschprofil insbesondere dann ein, wenn es nach dem Einstecken der Wandung des Luftkanalabschnitts in die Einstecktasche mit der Wandung (z.B. durch Punktschweißen oder durch eine Druckfügetechnik) verbunden wird. Das Flanschprofil ist nach dem Verschweißen mit der Wandung des Luftkanalabschnittes in der Weise verformt, dass der Scheitel des Wulstfalzes an die Außenwandung des zweiten L-Schenkels im Bereich des Zwischenabschnittes flächig angepresst wird. Hierdurch wird die Stabilität und Dichtwirkung des Flanschprofils weiter verbessert. Kräfte, die auf einen Teil des Flanschprofils einwirken, können effektiv auf weitere Teile des Flanschprofils übertragen werden, ohne dass es hierbei zu nennenswerten Deformationen des Flanschprofils kommt.

Nach einer vorteilhaften Ausgestaltung der Erfindung ist in dem Hohlraum des Flanschprofils ein entlang der Längserstreckung des Flanschprofils verlaufender, im Inneren der Einstecktasche im Bereich des Scheitels des Wulstfalzes angeordneter Dichtmittelstrang vorhanden. Der Dichtmittelstrang ist somit im Inneren der Einstecktasche angeordnet, und nicht, wie aus dem Stand der Technik bekannt, zwischen dem Scheitel des Wulstfalzes und der Außenwandung des zweiten L-Schenkels. Diese Anordnung des Dichtmittelstranges erzeugt nicht nur eine Abdichtung der Aufnahmekammer des Eckwinkelstückes gegenüber der Einstecktasche des Flanschprofils, sondern auch eine Abdichtung des Spalts zwischen der Innenwandung des ersten L-Schenkels und der in die Einstecktasche eingesteckten Wandung des Luftkanalabschnittes. Hierdurch wird das Austreten von Luft aus dem Luftkanal über das Flanschprofil reduziert. Zudem wird durch die Anordnung der Dichtmasse zwischen dem Scheitel des Wulstfalzes, dem Zwischenabschnitt und der in die Einstecktasche eingesteckten Wandung dem Flanschprofil eine sehr hohe Formstabilität verliehen. Das erfindungsgemäße Flanschprofil weist somit sehr gute Stabilitätseigenschaften auf, die mit Flanschprofilen des Standes der Technik nicht erreicht werden können.

Die aus dem Stand der Technik bekannte Anordnung der elastischen Dichtmasse zwischen dem Scheitel des Wulstfalzes und der Außenwandung des zweiten L-Schenkels ist nachteilig, da hierdurch lediglich eine Abdichtung der zur Aufnahme des Eckwinkelstückes zwischen den Wandungen des zweiten L-Schenkels vorgesehenen Aufnahmekammer gegenüber der durch den ersten L-Schenkel ausgebildeten Einstecktasche gegeben ist. Bei dieser Art der Abdichtung kann es vorkommen, dass durch den Luftkanal geführte Luft durch den Spalt zwischen der Innenwandung des ersten L-Schenkels und der in die Einstecktasche eingesteckten Wandung des Luftkanalabschnittes und von dort über den Spalt zwischen der Außenwandung des ersten L-Schenkels des Flanschprofils und der in die Einstecktasche eingesteckten Wandung des Luftkanalabschnittes in die Umgebung gelangt. In Anbetracht der heutigen Qualitäts- und Sicherheitsanforderungen an Luftkanäle, insbesondere solchen von luftführenden Hochdruckanlagen, ist eine derartige Ausgestaltung hinsichtlich der Dichtigkeit nicht zufrieden stellend.

Gemäß einer weiteren vorteilhaften Ausgestaltung der Erfindung ist an der Innenwandung des ersten L-Schenkels auf Höhe des Scheitels des Wulstfalzes eine in das Innere des Luftkanals ragende Sicke ausgebildet, die den Dichtmittelstrang zumindest teilweise aufnimmt. Diese Ausgestaltung des Flanschprofils dient dazu, die Position des Dichtmittelstranges, insbesondere beim Einstecken der Wandung des Luftkanals in die Einstecktasche, zu sichern. Die Sicke hat zudem eine stabilisierende Wirkung und dient somit zur Erhöhung der Formsteifigkeit eines damit versehenen Flanschprofils.

Eine weitere vorteilhafte Ausgestaltung der Erfindung sieht vor, dass der Dichtmittelstrang durch Einschieben der Wandung des Luftkanalabschnittes in die Einstecktasche teilbar ist, in der Weise, dass ein Teil des Dichtmittels in den Spalt zwischen dem Scheitel des Wulstfalzes und der Außenwandung des zweiten L-Schenkels gepresst wird und ein anderer Teil des Dichtmittels den Spalt zwischen der Wandung des Luftkanalabschnittes und der Innenwandung des ersten L-Schenkels zumindest teilweise ausfüllt. Auf diese Weise sind sämtliche Bereiche des Profils gegeneinander zuverlässig abgedichtet.

In einer vorteilhaften Ausführungsform der Erfindung ist das Dichtmittel des Dichtmittelstranges klebend. Dieses dient insbesondere der Lagesicherung des Flanschprofils an der Wandung des Luftkanalabschnittes vor dem Verschweißen von Flanschprofil und Wandung. Des Weiteren können so der Scheitel des Wulstfalzes, der Zwischenabschnitt und die in die Einstecktasche eingesteckte Wandung miteinander verklebt werden, was die Formstabilität des Flanschprofils verbessert.

Die erfindungsgemäßen Abdichtkappen und Flanschprofile bilden gemeinsam ein Verbindungssystem, welches sehr gute Stabilitäts- und Abdichteigenschaften aufweist und daher den heutigen Qualitätsanforderungen entspricht. Alle Komponenten des Verbindungssystems und somit das Verbindungssystem selber erfüllen die Kriterien der Dichtheitsklassen C und D.

Mit der Erfindung wird weiter ein Halteelement zum Halten eines Luftleitbleches in einem Luftkanal offenbart, aufweisend einen Kopf sowie einen daran angeordneten, in den Luftkanal einfügbaren Halteabschnitt, wobei der Halteabschnitt zwei parallel zueinander ausgerichtete Klemmelemente aufweist, welche jeweils aus zwei Klemmgliedern gebildet sind, zwischen denen der Rand eines Luftleitbleches einklemmbar ist, und wobei an der dem Halteabschnitt zugewandten Seite des Kopfes ein ringförmiges Dichtelement angeordnet ist, das eine Aussparung im Verbindungsbereich zwischen dem Halteabschnitt und dem Kopf aufweist.

Es hat sich in der Praxis gezeigt, dass derartig ausgebildete Halteelemente keine ausreichende Abdichtung eines Luftkanals gegen dessen Umgebung bewirken. Es ist feststellbar, dass über sie Luft aus dem Luftkanal austritt, was insbesondere bei einem unter Hochdruck stehenden Luftkanal sehr nachteilig ist und nicht den heutigen hohen Anforderungen an solche Luftkanäle entspricht. Mit den bekannten Halteelementen ist es nicht möglich, die Kriterien der Dichtheitsklassen C und D zu erfüllen.

Daher wird mit der Erfindung ein entsprechendes Halteelement vorgeschlagen, bei dem in dem Bereich zwischen den Klemmelementen ein zusätzliches Dichtelement angeordnet ist.

Durch das erfindungsgemäße Halteelement wird verhindert, dass Luft aus dem Luftkanal über das Halteelement austritt. Ein solcher Luftkanal erfüllt somit die Kriterien der Dichtheitsklassen C und D.

Nach einer vorteilhaften Ausgestaltung ist das zusätzliche Dichtelement einstückig mit dem ringförmigen Dichtelement ausgebildet. Die Anordnung dieses einstückig ausgebildeten Dichtelementes kann wie bei den üblichen, mit den beschriebenen Nachteilen behafteten Dichtelementen erfolgen. Es sind keine zusätzlichen und aufwändigen Arbeitsschritte erforderlich.

Ferner wird mit der Erfindung ein Luftkanal mit mehreren über Flanschprofile miteinander verbundenen Luftkanalabschnitten vorgeschlagen, wobei der Luftkanal abgewinkelte Luftkanalabschnitte umfasst, in denen ein Luftleitblech angeordnet ist, das über Halteelemente in der gewünschten Position relativ zu dem abgewinkelten Luftkanalabschnitt gehalten wird.

Erfindungsgemäß sind Halteelemente gemäß den vorbeschriebenen Ausgestaltungen ausgebildet, um so einen Luftkanal bereitstellen zu können, welcher der höchsten Dichtheitsklasse entspricht.

Vorzugsweise weist der Luftkanal ein Verbindungssystem nach einer der oben beschriebenen Ausgestaltungen auf.

Offenbart wird weiterhin ein Eckwinkelstück zum Verbinden von zwei an einem im Querschnitt rechteckig ausgebildeten Teilabschnitt eines Luftkanals senkrecht zueinander angeordneten Flanschprofilen einer Flanschprofilverbindung zwischen zwei Teilabschnitten eines Luftkanals, wobei das Eckwinkelstück bei seiner bestimmungsgemäßen Anordnung an den Flanschprofilen L-förmig ausgebildet ist und zwei separate, senkrecht zueinander angeordnete Schenkel aufweist, die jeweils einendseitig einen Anlageabschnitt aufweisen, mit denen die Schenkel aneinander anliegen. Es handelt sich insbesondere um ein Eckwinkelstück für ein Verbindungssystem der oben beschriebenen Art.

Eine herkömmliche Flanschprofilverbindung ist beispielsweise aus DE 20 2007 007 165 U1 bekannt. Zum Verbinden von Teilabschnitten eines Luftkanals werden die Flanschprofile stirnseitig an den Luftkanalteilabschnitten angeordnet. Der im Querschnitt rechteckig ausgebildete Luftkanal wird an jedem stirnseitigen Ende umlaufend mit Flanschprofilen versehen. Zwei derartig präparierte Luftkanalteilabschnitte werden auf Stoß zusammengefügt und anschließend beispielsweise durch Anordnung von Klammern, Verschraubungen oder ähnlichem an den Flanschprofilen aneinander fixiert. Zwei senkrecht zueinander angeordnete Flanschprofile sind über ein L-förmig ausgebildetes und zwei senkrecht zueinander angeordnete Schenkel aufweisendes Eckwinkelstück miteinander verbunden. Die Eckwinkelstücke sind bei DE 20 2007 007 165 U1 einstückig ausgebildet und weisen somit keine separaten Schenkel auf. Bei Verwendung solcher einstückig ausgebildeter Eckwinkel ist es erforderlich, dass die Schenkel der Eckwinkel bereits vor dem Befestigen der Flanschprofile an einem Luftkanalteilabschnitt in die Flanschprofile eingeführt werden. Dieses erschwert deutlich die Anordnung einer entsprechenden Flanschprofilverbindung und erfordert es, dass mehrere Personen zur Montage der Flanschprofile zusammenarbeiten müssen.

Um die Montage einer Flanschprofilverbindung zu vereinfachen, schlägt DE 689 07 727 T2 ein zweiteiliges Eckwinkelstück mit zwei separaten, senkrecht zueinander angeordneten Schenkeln vor, die jeweils einendseitig einen Anlageabschnitt aufweist, mit denen die Schenkel aneinander anliegen. Dies ermöglicht die Anordnung des Eckwinkels an den Flanschprofilen, nachdem diese an einem Luftkanalteilabschnitt befestigt worden sind. Diese nachträgliche Anordnung der Eckwinkel umfasst das Einbringen von einem der separaten Schenkel bis zu einer bestimmten Tiefe in ein erstes Flanschprofil und daraufhin das Einbringen des anderen der beiden separaten Schenkel in ein zum ersten Flanschprofil senkrecht ausgerichtetes zweites Flanschprofil bis zu einer bestimmten Tiefe. Das Einbringen kann beispielsweise durch Einschlagen der Schenkel mittels eines Hammers erfolgen. Die relative Fixierung der beiden Schenkel zueinander in ihrer bestimmungsgemäßen Endposition erfolgt über Endflansche und diesen gegenüberliegend angeordnete Ansätze an den Anlageabschnitten.

Nachteilig bei einer solchen Ausgestaltung ist, dass keine ausreichende Sicherung der relativen Position der beiden Schenkel untereinander gewährleistet ist. Da entsprechend ausgebildete Flanschprofilverbindungen jedoch die auf den Luftkanal einwirkenden Kräfte aufnehmen müssen, sind an sie hohe Stabilitätsanforderungen zu stellen.

Dementsprechend schlägt die Erfindung vor, dass die Anlageabschnitte der Schenkel jeweils mit einer Verzahnung versehen sind, wobei die Verzahnung des einen Schenkels in die des anderen Schenkels eingreift.

Gemäß der Erfindung wird somit ein zweiteiliges Eckwinkelstück mit zwei separaten Schenkeln vorgeschlagen, deren Anlageabschnitte bei bestimmungsgemäßer Anordnung der Vorrichtung an den Flanschprofilen derart aneinander anliegen und gegeneinander gepresst werden, dass die Verzahnungen der Anlageabschnitte zur Sicherung der Relativstellung der beiden separaten Schenkel zueinander ineinander eingreifen. Hierdurch wird die Relativposition der beiden Schenkel zueinander deutlich besser gesichert, als es bei den aus dem Stand der Technik bekannten Eckwinkeln der Fall ist. Dieses wird erreicht, ohne dass die Handhabung der Vorrichtung erschwert ist oder zusätzliche Arbeitsschritte erforderlich sind. Die beiden Schenkel können stattdessen auf herkömmliche Art und Weise in die jeweiligen Flanschprofile eingebracht werden und nehmen in ihrer Endposition ihre zueinander senkrechte Anordnung ein, welche durch die Anordnung der Verzahnungen an den Anlageabschnitten gegen Relativbewegungen der Schenkel zueinander gesichert ist.

Eine vorteilhafte Ausgestaltung der Erfindung sieht vor, dass wenigstens ein Schenkel an dem Ende, an dem der Anlageabschnitt angeordnet ist, eine in Richtung der Verzahnung und quer zur Längserstreckung des Schenkels ausgerichtete Abwinkelungen aufweist. Es können auch beide Schenkel mit einer entsprechenden Abwinkelung versehen sein. Diese Abwinkelungen dienen unter anderem der Begrenzung der Bewegbarkeit der Schenkel zueinander beim Einbringen derselben in die Flanschprofile. Diese Ausgestaltung der Vorrichtung dient zudem der weiteren Verbesserung der Sicherung der Relativposition der Schenkel zueinander.

Nach einer weiteren vorteilhaften Ausgestaltung der Erfindung ist wenigstens ein Schenkel mit Ausnahme seines Anlageabschnitts im Querschnitt im Wesentlichen U-förmig ausgebildet. Hierdurch wird die Formsteifigkeit eines solchen Schenkels deutlich erhöht, um den gegebenen Stabilitätsanforderungen zu genügen. Auch hier ist möglich, dass beide Schenkel derartig ausgebildet sind.

Ferner wird vorgeschlagen, dass wenigstens einer der Schenkel einen Anschlag aufweist. Dieser Anschlag ist vorzugsweise so an dem Schenkel angeordnet, dass er die maximale Einbringtiefe des Schenkels in ein Flanschprofil derart begrenzt, dass der Anlageabschnitt bei Erreichen der Endstellung eines Schenkels vollständig außerhalb des Flanschprofils verbleibt. Es können auch beide Schenkel mit einem solchen Anschlag versehen sein.

Die Schenkel des erfindungsgemäßen Eckwinkelstücks bestehen bevorzugt aus Kunststoff.

Weitere Vorteile und Merkmale der vorliegenden Erfindung werden im Folgenden anhand der in den Figuren gezeigten Ausführungsbeispiele näher erläutert. Dabei zeigen:
- Figur 1:: Querschnitt eines Ausführungsbeispiels des erfindungsgemäßen Flanschprofils,
- Figur 2:: Querschnitt eines weiteren Ausführungsbeispiels des erfindungsgemäßen Flanschprofils,
- Figur 3:: perspektivische Darstellung eines Ausführungsbeispiels der erfindungsgemäßen Abdichtkappe,
- Figur 4:: schematische Explosionszeichnung eines Ausführungsbeispiels des erfindungsgemäßen Verbindungssystems,
- Figur 5:: schematische Darstellung eines Ausführungsbeispiels eines Luftkanalabschnitts des erfindungsgemäßen Luftkanals mit Luftleitblech,
- Figuren 6A-6C:: verschiedene Perspektiven eines Ausführungsbeispiels des erfindungsgemäßen Halteelementes,
- Figur 7:: eine perspektivische Darstellung eines Ausführungsbeispiels des erfindungsgemäßen Eckwinkelstücks in nichtmontierter Stellung, und
- Figur 8:: eine perspektivische Darstellung eines weiteren Ausführungsbeispiels des erfindungsgemäßen Eckwinkelstücks in seiner Montagestellung.

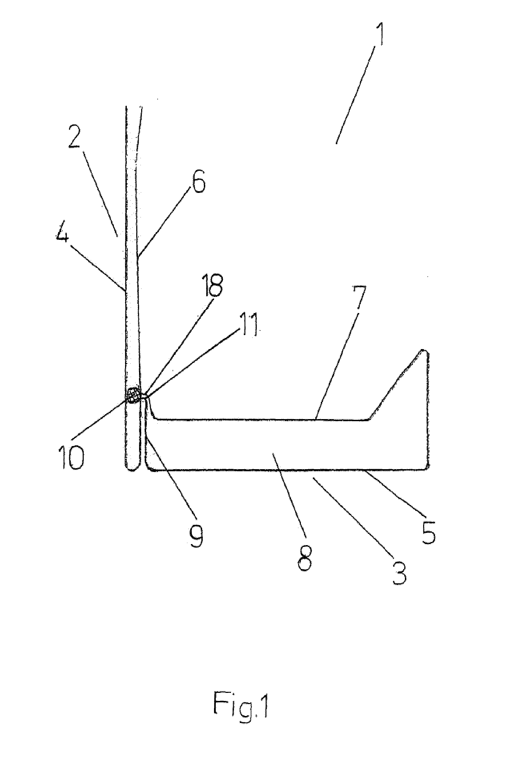

Figur 1 zeigt einen Querschnitt eines ersten Ausführungsbeispiels des erfindungsgemäßen Flanschprofils 1 zum luftdichten Verbinden von zwei Luftkanalabschnitten eines Luftkanals. Das Flanschprofil 1 ist als im Querschnitt im Wesentlichen L-förmiges Hohlprofil aus gefalztem Blech ausgebildet. Die L-Schenkel 2 und 3 des Flanschprofils 1 sind doppelwandig ausgebildet. Die L-Schenkel 2 und 3 weisen jeweils eine Innenwandung 4 bzw. 5 und eine Außenwandung 6 bzw. 7 auf. Die Wandungen 4 und 6 des ersten L-Schenkels 2 bilden eine endseitig offene Einstecktasche zum Einstecken der Wandung eines nicht dargestellten Luftkanalabschnittes aus. Die Wandungen 5 und 7 des zweiten L-Schenkels 3 bilden eine Aufnahmekammer 8 zur Aufnahme eines nicht dargestellten Schenkels eines Eckwinkelstückes aus. Der zweite L-Schenkel 3 weist an seiner Innenwandung 5 einen entlang der Längserstreckung des Flanschprofils 1 verlaufenden, in das Innere des Hohlprofils hinein bis an die Außenwandung 7 heranragenden Wulstfalz 9 auf. Dieser dient zur Führung der Wandung des Luftkanalabschnittes beim Einstecken in die Einstecktasche. In dem Hohlraum des Flanschprofils 1 ist zudem ein entlang der Längserstreckung des Flanschprofils 1 verlaufender, im Inneren der Einstecktasche im Bereich des Scheitels 11 des Wulstfalzes 9 angeordneter Dichtmittelstrang 10 vorhanden. Die Außenwandung 7 des zweiten L-Schenkels 3 weist in dem Übergangsbereich zur Außenwandung 6 des ersten L-Schenkels 2 einen Zwischenabschnitt 18 mit zu dem Wulstfalz 9 komplementärer, nach außen gewölbter und gerundeter Form auf. Nach dem Verschweißen des Flanschprofils 1 mit einem nicht dargestellten Luftkanalabschnitt kann der Wulstfalz 9 mit dem Zwischenabschnitt 18 derart zusammenwirken, dass das Flanschprofil 1 weitestgehend gegen Deformationen bei Krafteinwirkung geschützt ist. Solche Deformationen würden sich auch nachteilig auch die Dichtwirkung des Flanschprofils 1 auswirken können.

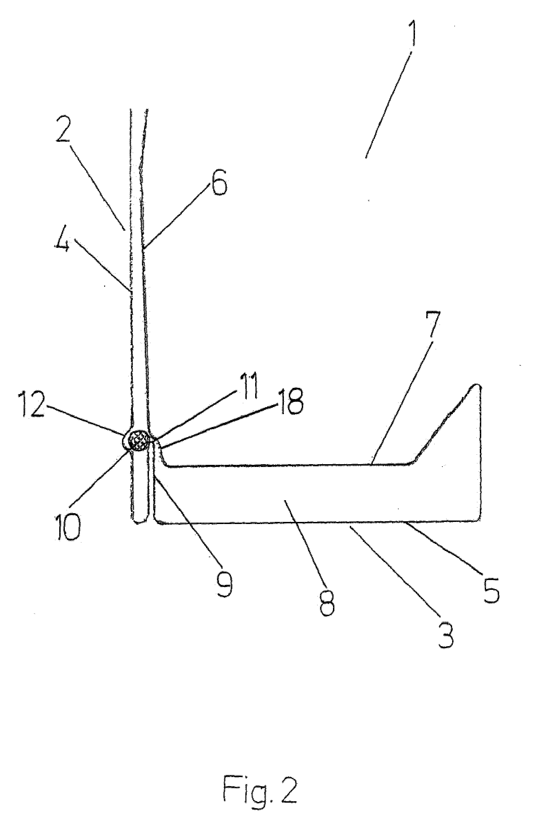

Figur 2 zeigt ein weiteres Ausführungsbeispiel des erfindungsgemäßen Flanschprofils 1. Diese Ausführungsform unterscheidet sich von der in Figur 1 gezeigten dadurch, dass an der Innenwandung 4 des ersten L-Schenkels 2 auf Höhe des Scheitels 11 des Wulstfalzes 9 eine in das Innere des (nicht dargestellten) Luftkanals ragende Sicke 12 ausgebildet ist, die den Dichtmittelstrang 10 zumindest teilweise aufnimmt.

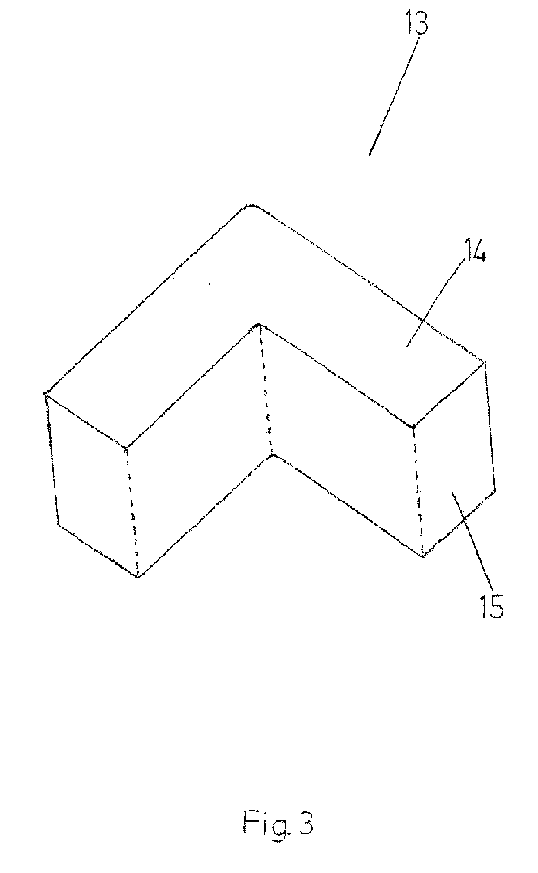

Figur 3 zeigt ein Ausführungsbeispiel der erfindungsgemäßen Abdichtkappe 13, die als an ihrer dem Luftkanal zugewandten Innenseite offene, hohle Eckkappe ausgebildet ist. Die Abdichtkappe 13 weist einen im Längsschnitt L-förmig und im Querschnitt U-förmig ausgebildeten Körper 14 auf, in dem ein innerer Hohlraum ausgebildet ist, der mit einer plastischen Dichtmasse 15 gefüllt ist.

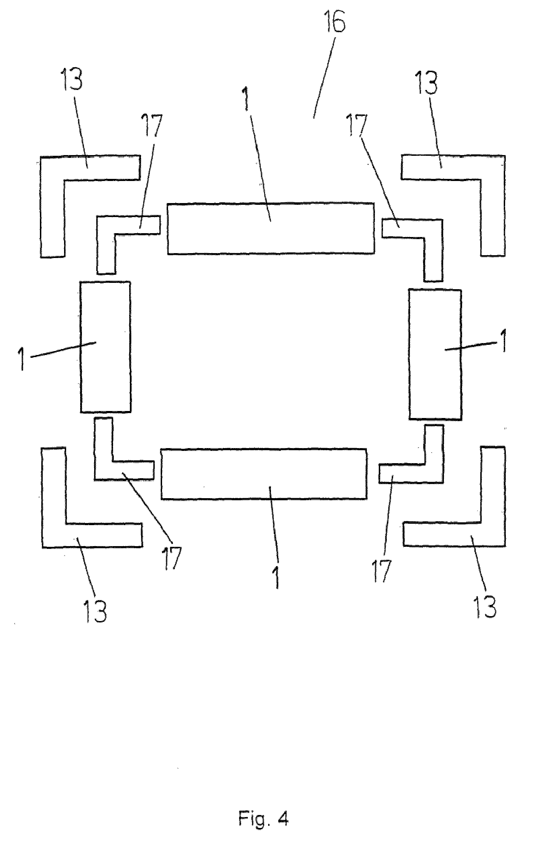

Figur 4 zeigt schematisch eine Explosionszeichnung eines Ausführungsbeispiels des erfindungsgemäßen Verbindungssystems 16 zum luftdichten Verbinden von zwei Luftkanalabschnitten eines im Querschnitt polygonal, insbesondere rechteckig, ausgebildeten Luftkanals. Das Verbindungssystem 16 weist Flanschprofile 1 auf, die endseitig an den Wandungen der Luftkanalabschnitte befestigbar sind. Des Weiteren weist das Verbindungssystem 16 in die Flanschprofile 1 einsetzbare Eckwinkelstücke 17 zum gegenseitigen Verbinden der Flanschprofile 1 an den Ecken des Luftkanals auf. Ferner weist das Verbindungssystem 16 Abdichtkappen 13 auf, deren Schenkel so lang ausgebildet sind, dass sie bei ihrer bestimmungsgemäßen Anordnung an den Ecken des Luftkanals die dort angeordneten Eckwinkelstücke 17 vollständig und die mit den Eckwinkelstücken 17 verbundenen Flanschprofile 1 zumindest in ihren Endbereichen, wo sie mit den Eckwinkelstücken 17 verbunden sind, überdecken.

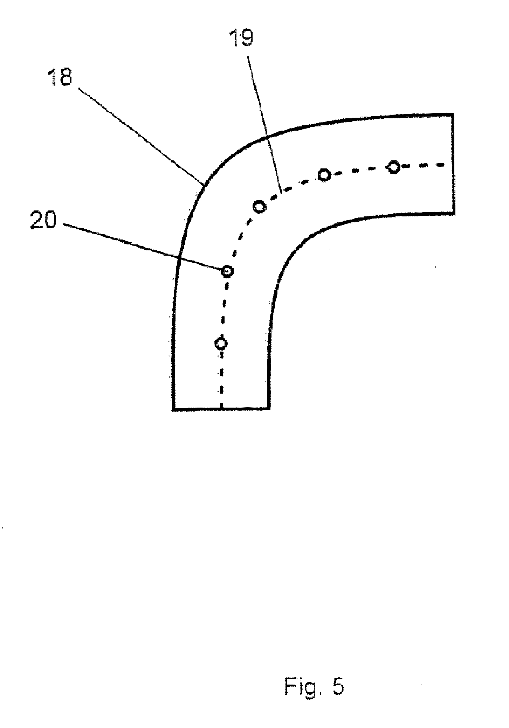

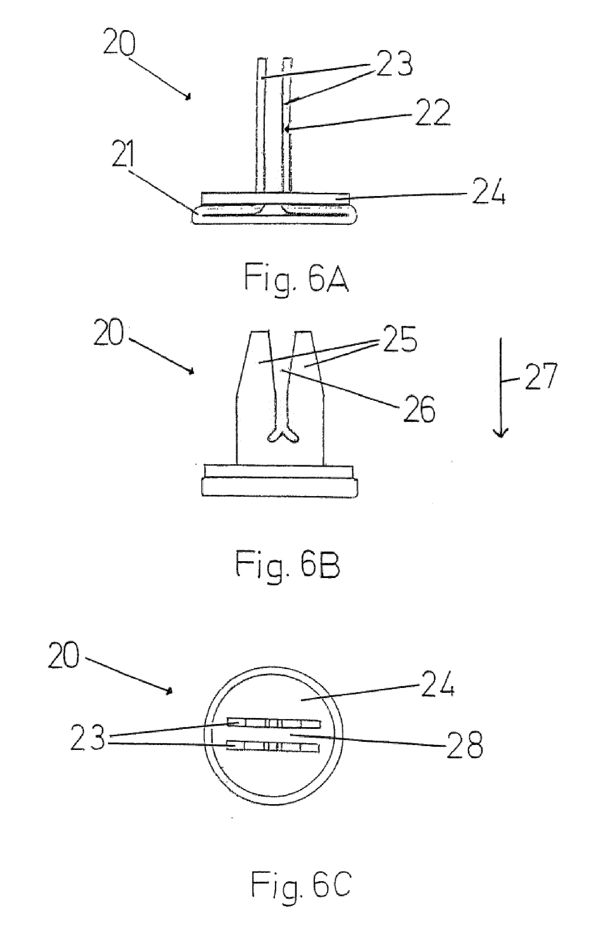

Figur 5 zeigt schematisch ein Ausführungsbeispiel für einen abgewinkelten Luftkanalabschnitt 18 des nicht näher dargestellten erfindungsgemäßen Luftkanals. In dem Luftkanalabschnitt 18 ist ein Luftleitblech 19 angeordnet, welches zur besseren Führung eines durch den Luftkanal beziehungsweise den Luftkanalabschnitt 18 strömenden Luftstromes dient. Das Luftleitblech 19 wird mittels der Halteelemente 20 in seiner Position relativ zum Luftkanalabschnitt 18 gehalten. Der in den Figuren 6A, 6B und 6C dargestellte Halteabschnitt jedes Halteelementes 20 ist hierbei in eine Bohrung in der Wandung des Luftkanalabschnittes 18 eingefügt.

Figur 6A zeigt eine Seitenansicht eines Ausführungsbeispiels des erfindungsgemäßen Halteelementes 20. Das Halteelement 20 weist einen Kopf 21 und einen daran angeordneten Halteabschnitt 22 auf. Der Halteabschnitt 22 besteht aus zwei parallel zueinander ausgerichteten Klemmelementen 23. An dem Kopf 21 ist ein ringförmig ausgebildetes Dichtelement 24 angeordnet, welches bei bestimmungsgemäßer Anordnung des Halteelementes 20 an einem Luftkanal an der Außenseite der Luftkanalwandung anliegt. Das Halteelement 20 besteht, abgesehen von dem Dichtelement 24 aus elastischem Material, aus einem einstückig ausgebildeten, gefalzten Blech.

Figur 6B zeigt das in Figur 6A dargestellte Halteelement 20 in einer um eine vertikale Achse um 90° gedrehten Stellung. Es sind die beiden Klemmglieder 25 eines Klemmabschnittes 23 zu sehen, zwischen denen ein sich zum Kopf 21 hin verjüngender Klemmspalt 26 angeordnet ist, in den die Wandung eines Luftkanalabschnitts eingefügt werden kann.

Figur 6C zeigt schließlich eine Ansicht des in Figur 6B gezeigten Halteelementes 20 gemäß dem in Figur 6B dargestellten Pfeil 27. Hier ist das zusätzliche Dichtelement 28 zu erkennen, welches zwischen den beiden Klemmelementen 23 angeordnet ist. Dieses zusätzliche Dichtelement 28 ist in dieser Ausführungsform einstückig mit dem ringförmigen Dichtelement 24 ausgebildet.

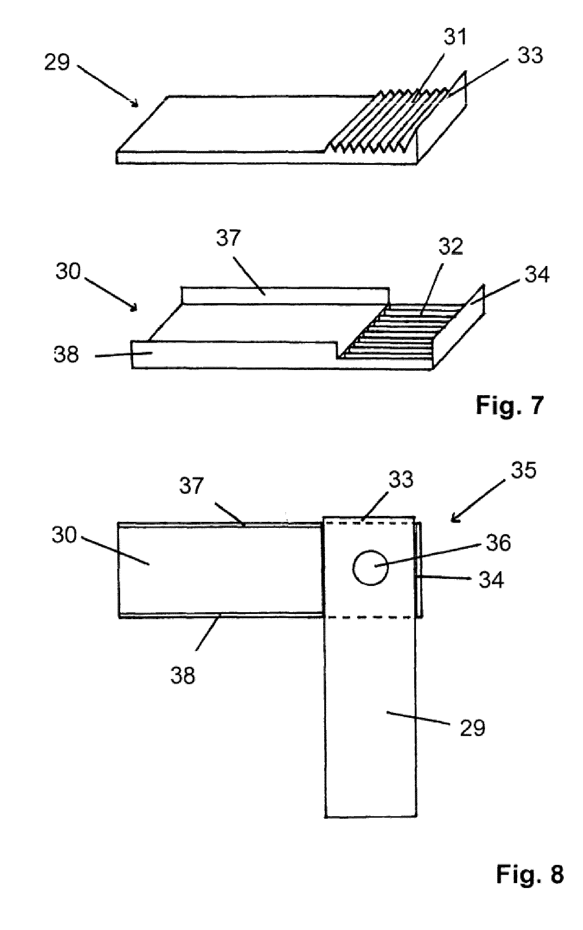

Figur 7 ist eine perspektivische und schematische Darstellung einer beispielhaften Ausführungsform der beiden Schenkel 29 und 30 eines erfindungsgemäßen Eckwinkelstücks 35. Die Schenkel 29 und 30 weisen jeweils einendseitig einen Anlageabschnitt 31 beziehungsweise 32 auf. Mit diesen Anlageabschnitten 31 und 32 liegen die Schenkel 29 und 30 bei bestimmungsgemäßer Anordnung des Eckwinkelstücks 35 an einer Flanschprofilverbindung aneinander an, wie es in Figur 8 gezeigt ist. Die Anlageabschnitte 31 und 32 sind jeweils mit einer Verzahnung versehen. Bei bestimmungsgemäßer Anordnung des Eckwinkelstücks 35 an einer Flanschprofilverbindung, wie sie in Figur 8 gezeigt ist, greift die Verzahnung von Schenkel 29 in die von Schenkel 30 ein. Hierdurch erfolgt die erfindungsgemäße Sicherung der Relativposition der Schenkel 29 und 30 zueinander. Die Schenkel 29 und 30 weisen jeweils an dem Ende, an dem der Anlageabschnitt 31 beziehungsweise 32 angeordnet ist, eine in Richtung der Verzahnung und quer zur Längserstreckung des Schenkels 29 beziehungsweise 30 ausgerichtete Abwinkelung 33 beziehungsweise 34 auf. Die Funktion der Abwinkelungen 33 und 34 wird genauer aus Figur 8 deutlich. Schenkel 30 ist mit Ausnahme seines Anlageabschnitts 32 im Querschnitt im Wesentlichen U-förmig ausgebildet. Dies erhöht die Formsteifigkeit von Schenkel 30, um den gegebenen Stabilitätsanforderungen zu genügen.

Figur 8 zeigt schematisch ein Ausführungsbeispiel des erfindungsgemäßen Eckwinkelstücks 35 in seiner bestimmungsgemäßen Anordnung an den Flanschprofilen (nicht dargestellt). Es ist L-förmig ausgebildet und weist die zwei separaten, senkrecht zueinander angeordneten Schenkel 29 und 30 auf, welche im Wesentlichen wie in Figur 7 gezeigt ausgebildet sind. Die Anlageabschnitte 31 und 32 der Schenkel 29 und 30 liegen aneinander. Ihre Verzahnungen greifen zur Sicherung der Relativposition der Schenkel 29 und 30 zueinander ineinander. Die Schenkel 29 und 30 beziehungsweise deren Anlageabschnitte 31 und 32 weisen in dieser Ausführungsform jeweils eine Öffnung 36 auf, über die eine Verschraubung der Schenkel 29 und 30 miteinander erfolgen kann, um die Relativposition der beiden Schenkel 29 und 30 zueinander weiter zu sichern. Durch ein solches Verschrauben der beiden Schenkel 29 und 30 werden die Verzahnungen derart ineinander gepresst, dass das Eckwinkelstück 35 die gleichen Stabilitätseigenschaften wie ein herkömmlicher einstückig ausgebildeter Eckwinkel aufweist. Die Abwinkelungen 33 und 34 dienen ebenfalls der Sicherung der relativen Stellung der Schenkel 29 und 30 zueinander.

Im Folgenden wird die Montage des erfindungsgemäßen Eckwinkelstücks 35 an einer nicht dargestellten Flanschprofilverbindung erläutert. Dabei wird zunächst der Schenkel 30 in ein bereits an einem Luftkanalteilabschnitt angeordnetes Flanschprofil eingebracht. Dieses kann beispielsweise durch Schlagen mit einem Hammer auf die Abwinkelung 34 erfolgen. Damit der Schenkel 30 nicht vollständig in das Flanschprofil eingebracht wird, weist er einen nicht dargestellten Anschlag auf, damit in seiner Endstellung der Anlageabschnitt 32 mit seiner Verzahnung vollständig außerhalb des Flanschprofils angeordnet ist. Nach Erreichen der bestimmungsgemäßen Endstellung des ersten Schenkels 29 wird nun der zweite Schenkel 30 in ein ebenfalls bereits an dem Luftkanalteilabschnitt senkrecht zu dem vorgenannten Flanschprofil angeordnetes Flanschprofil eingebracht. Dieses kann beispielsweise ebenso durch Schlagen mit einem Hammer auf die Abwinkelung 33 erfolgen. Bei diesem Einbringen des Schenkels 29 wird er zwischen der Abwinkelung 34 und den Längsschenkeln 37 und 38 des Schenkels 2 geführt. Die maximale Einbringtiefe des Schenkels 29 in das entsprechende Flanschprofil wird durch die Abwinkelung 33 begrenzt, welche, wie in Figur 8 gezeigt, an einer Seite entlang der Längserstreckung des Schenkels 30 bei Erreichen der bestimmungsgemäßen Endstellung von Schenkel 29 anliegt. Sind beide Schenkel 29 und 30 in ihre Endstellungen überführt, befindet sich das Eckwinkelstück 35 in seiner bestimmungsgemäßen Ausgestaltung zum Verbinden der Flanschprofile, in der die Verzahnungen ineinander greifen.

## Patentansprüche

1. Verbindungssystem (16) zum luftdichten Verbinden von zwei Luftkanalabschnitten eines im Querschnitt polygonal, insbesondere rechteckig, ausgebildeten Luftkanals, mit Flanschprofilen (1), die endseitig an den Wandungen der Luftkanalabschnitte befestigbar sind, und mit in die Flanschprofile (1) einsetzbaren Eckwinkelstücken (17) zum gegenseitigen Verbinden der Flanschprofile (1) an den Ecken des Luftkanals,
**gekennzeichnet durch** Abdichtkappen (13), die als an ihrer dem Luftkanal zugewandten Innenseite offene, hohle Eckkappen ausgebildet sind, jeweils über zwei an einer Ecke des Luftkanals angeordnete Eckwinkelstücke (17) stülpbar sind und in ihrem inneren Hohlraum eine plastische Dichtmasse (15) aufweisen, wobei die Abdichtkappen (13) bei deren bestimmungsgemäßer Anordnung an dem Luftkanal die Trennfuge zwischen den Luftkanalabschnitten in den Eckbereichen des Luftkanals dichtend verschließen.

2. Verbindungssystem (16) nach Anspruch 1, **dadurch gekennzeichnet, dass** jede Abdichtkappe (16) bei ihrer bestimmungsgemäßen Anordnung an einer Ecke des Luftkanals die beiden dort angeordneten Eckwinkelstücke (17) vollständig und die mit den Eckwinkelstücken (17) verbundenen Flanschprofile (1) zumindest in ihren Endbereichen, wo sie mit den Eckwinkelstücken (17) verbunden sind, überdeckt.

3. Verbindungssystem (16) nach Anspruch 2, **dadurch gekennzeichnet, dass** sich die plastische Dichtmasse (15) jeder Abdichtkappe (13) bei bestimmungsgemäßer Anordnung derselben an einer Ecke des Luftkanals an die Form der beiden dort angeordneten Eckwinkelstücke (17) sowie an die Form der Enden der mit den Eckwinkelstücken (17) verbundenen Flanschprofile (1) anpasst, in der Weise, dass die Abdichtkappe (13) über die plastische Dichtmasse (15) an dem Luftkanal fixiert ist.

4. Verbindungssystem (16) nach einem der Ansprüche 1 bis 3, **dadurch gekennzeichnet, dass** der die plastische Dichtmasse (15) enthaltende innere Hohlraum jeder Abdichtkappe (13) bis zur Anbringung desselben an dem Luftkanal mittels einer abziehbaren Folie an der Innenseite der Abdichtkappe (13) verschlossen ist.

5. Verbindungssystem (16) nach einem der Ansprüche 1 bis 4, **dadurch gekennzeichnet, dass** die plastische Dichtmasse (15) klebend und/oder aushärtbar ist.

6. Verbindungssystem (16) nach einem der Ansprüche 1 bis 5, **dadurch gekennzeichnet, dass** die Flanschprofile (1) nach einem der Ansprüche 1 bis 5 ausgebildet sind.
